# EUROPÄISCHE PATENTSCHRIFT

(11) **EP 1 543 069 B1**
(45) Veröffentlichungstag und Bekanntmachung des Hinweises auf die Patenterteilung: **09.12.2009**
(21) Anmeldenummer: 03807757.4
(22) Anmeldetag: 25.07.2003
(51) Int. Cl.: C08K 3/00, C08K 3/22, C08K 5/00, C08K 13/00

(54) **FORMKÖRPER AUS KUNSTSTOFF, ENTHALTEND EINEN FLUORESZENZFARBSTOFF**
PLASTIC MOLDED BODY CONTAINING A FLUORESCENT DYE
CORPS MOULE EN MATIERE PLASTIQUE CONTENANT UN COLORANT FLUORESCENT

(30) Priorität: 24.09.2002 DE 10244706
(43) Veröffentlichungstag der Anmeldung: 22.06.2005
(73) Patentinhaber: Evonik Röhm GmbH, 64293 Darmstadt (DE)
(72) Erfinder: LICHTENSTEIN, Hans, 64354 Reinheim (DE); ITTMANN, Günther, 64823 Gross-Umstadt (DE); ALBRECHT, Eduard, 38723 Seesen (DE)
(74) Vertreter: Gottschalk, Michael
(86) Internationale Anmeldenummer: PCT/EP2003/008213
(87) Internationale Veröffentlichungsnummer: WO 2004/033543

(56) Entgegenhaltungen:
- EP-A- 0 559 083
- EP-A- 0 570 782

## Beschreibung

Die Erfindung betrifft einen Formkörper aus Kunststoff, enthaltend einen Fluoreszenzfarbstoff.

### Stand der Technik

EP-A 0 553 083 beschreibt Leuchtkörper aus Kunststoff, die einen Fluoreszenzfarbstoff und ein Weißpigment, z. B. TiO₂ oder BaSO₄, in Konzentrationen von 0,1 bis 5 Gew.-% enthalten. Zusätzlich können weitere Pigmente enthalten sein.

### Aufgabe und Lösung

Formkörper, insbesondere Kunststoffplatten aus gegossenem Polymethylmethacrylat, die gemäß der EP-A 0 553 083 einen Fluoreszenzfarbstoff und BaSO₄ als Streumittel enthalten sind bekannt. Ausgehend von diesem Stand der Technik sollte insbesondere die Farbbrillianz der Formkörper verbessert werden.

### Die Aufgabe wird gelöst durch einen

Formkörper aus einer Kunststoff-Matrix aus einem transparenten Kunststoff, enthaltend einen löslichen Fluoreszenzfarbstoff und ein Streumittel mit einem Brechungsindexunterschied von +/- 0,003 bis 0,2 zur Kunststoff -Matrix,
dadurch gekennzeichnet, daß
das zusätzlich ein Weißpigment, das einen Brechungsindexunterschied von + 0,4 bis 1,5 zur Kunststoff-Matrix aufweist, in einer Konzentration von 0,001 bis 0,1 Gew.-% enthalten ist.

Überraschenderweise bewirkt der Zusatz des Weißpigments in einer unüblich geringen Konzentration eine deutliche Steigerung der Farbbrillianz. Die erfindungsgemäßen Formkörper weisen insbesondere einen Remissionsgrad gemessen in % mit einem Spektralphotometer nach DIN 5036 auf, der um mindestens 10 % höher liegt als bei einem entsprechenden Formkörper ohne Weißpigment. Dabei ist die Steigerung der Farbbrillianz bereits mit bloßem Auge deutlich wahrnehmbar.

### Ausführung der Erfindung

Die Erfindung betrifft Formkörper aus einer Kunststoff-Matrix aus einem transparenten Kunststoff, enthaltend einen löslichen Fluoreszenzfarbstoff, ggf. in Kombination mit weiteren Farbmitteln (Pigmente, Farbstoffe), und ein Streumittel mit einem Brechungsindexunterschied von +/- 0,003 bis 0,2 zur Kunststoff -Matrix,
dadurch gekennzeichnet, daß
das zusätzlich ein Weißpigment, das einen Brechungsindexunterschied von + 0,4 bis 1,5 zur Kunststoff-Matrix aufweist, in einer Konzentration von 0,001 bis 0,1 Gew.-% enthalten ist.

### Fluoreszenzfarbstoffe

Der Formkörper enthält an sich bekannte lösliche Fluoreszenzfarbstoffe, z. B. solche basierend auf der chemischen Klasse der Perylene.

WO 99/16847 beschreibt Fluoreszenzfarbstoffe, die in Kunststoffen wie z. B. Polycarbonat, Polymethylmethacrylat, Polyvinylidenfluorid oder Mischungen aus Polymethylmethacrylat und Polyvinylidenfluorid löslich sind und für gelb fluoreszierende Artikel bzw. Formkörper eignen. Bei den Fluoreszenzfarbstoffen handelt es sich um Mischungen aus N,N'-disubstituiertem 3,4:9,10-Perylenbis(dicarboximid) und gelb fluoreszierenden Farbstoffen mit definierten Farbkoordinaten-Bereichen gemäß dem CIE 1931 Standard colorimetrischen System und Fluoreszenz/Lumineszenz-Faktoren größer 5.

Geeignet für die Zwecke der Erfindung sind insbesondere die handelsüblichen Fluoreszenzfarbstoffe Lumogen® F Orange 240, Lumogen® F Gelb 083, Lumogen® F Rot 240 (Lumogen®: Marke der BASF AG, Ludwigshafen, Deutschland) sowie Hostasol® Gelb 3G.

### Weitere Farbmittel

Die Fluoreszenzfarbstoffe können in Kombination mit weiteren Farbmitteln vorliegen. Weitere Farbmittel sind z. B. Pigmente und Farbstoffe, insbesondere nicht fluoreszierende Farbstoffe. Weitere Farbmittel sind z. B. Kupfer-Phthalocyaningrün, Kupfer-Phthalocyaninblau, Eisenoxid-Rot, Ultramarinblau, Chromtitangelb, Farbstoffe der Anthrachinonreihe. Die Kombination von Fluoreszenzfarbstoffen mit weiteren Farbmitteln ermöglicht die Abdeckung eines größeren Farbspektrums. Beispielsweise kann die Kombination eines gelb fluoreszierenden Fluoreszenzfarbstoffs mit einem Grünpigment, z. B, Kupfer-Phthalocyaningrün, sinnvoll eingesetzt werden, um ein brilliant fluoreszierendes Grün zu erzeugen. Weitere Farbmittel können z. B. in Mengen von 0,001 bis 1, bevorzugt von 0,01 bis 0,5 Gew.-% enthalten sein.

### Streumittel

Unter Streumitteln sind nicht lösliche Zusätze von geringer Größe, z. B. im Bereich von 1 µm bis 1 mm, zu verstehen, die sich in die Matrix-Kunststoff einarbeiten lassen. Die Streumittel weisen einen Brechungsindexunterschied im Bereich von +/- 0,003 bis 0,2 auf.

Geeignete Streumittel sind z. B. Aluminiumhydroxid, Aluminium-Kalium-Silikat (Glimmer), Aluminiumsilikat (Kaolin), Bariumsulfat, Calciumcarbonat, Magnesiumsilikat (Talkum), Polystryrol und/oder Lichtstreuperlen aus vernetztem Kunststoff. Lichtstreuperlen aus Copolymeren aus Methymethacrylat und Stryrol oder Benzylmethacrylat, die zusätzlich vernetzt sein können, sind bekannt z. B. aus DE 35 28 165 C2, EP 570 782 B1 oder EP 656 548 A2.

### Weißpigment

Das Weißpigment weist einen Brechungsindexunterschied von + 0,4 bis 1,5, bevorzugt von + 0,5 bis 1,4, besonders bevorzugt von 1,0 bis 1,3 zur Kunststoff-Matrix auf und ist in der Kunststoff-Matrix in einer Konzentration von 0,001 bis 0,1, bevorzugt 0,005 bis 0,01 Gew.-% enthalten.

Bevorzugte Weißpigmente sind z. B. Titandioxid (TiO₂), Zinkoxid (ZnO) oder Zinksulfid (ZnS).

### Formkörper

Der erfindungsgemäße Formkörper weist einen Remissionsgrad gemessen in % mit einem Spektralphotometer nach DIN 5036 auf, der um mindestens 10 %, bevorzugt mindestens 15, insbesondere mindestens 20 % höher liegt als bei einem entsprechenden Formkörper ohne Weißpigment.

Die erfindungsgemäßen Formkörper können nach Einarbeitung des Fluoreszenzfarbstoffs und gegebenenfalls weiterer Farbmittel in die entsprechenden Kunststoffe bzw. in die Kunststoff-Matrix vor oder nach deren Polymerisation erhalten werden. Die Einarbeitung kann verfahrensmäßig z. B. durch Einrühren, mittels Knetern, Auftrommeln, Direktzudosieren oder die Zugabe hochkonzentrierter Masterbatches in einen polymerisierbaren Kunststoffsirup oder in die Kunststoffschmelze eines thermoplastischen Polymers erfolgen. Das so eingefärbte Kunststoffmaterial kann in an sich bekannter Weise z. B. durch Extrusion, Spritzguß, Warmformen, spanende Verarbeitung etc. weiterverarbeitet werden.

Es kann sich um einen praktisch beliebigen Formkörper handeln. Bevorzugt ist die Form von Platten, Rohren oder Stäben.

### Kunststoffe

Der transparente Kunststoff der Kunststoff-Matrix weist eine Transmission im sichtbaren Bereich von mindestens 40 %, bevorzugt mindestens 50, besonders bevorzugt mindestens 70 %, insbesondere mindestens 80 % auf (Lichttransmissionsgrad für Tageslicht (Normlichtart D65) τ_{D65} s. z. B. DIN 67 507). Bevorzugt sind thermoelastische oder thermoplastische Kunststoffe.

Der transparente Kunststoff der Kunststoff-Matrix kann extrudierter Polymethylmethacrylat-Kunststoff, gegossener Polymethylmethacrylat-Kunststoff, schlagzäh modifizierter Polymethylmethacrylat-Kunststoff, Polycarbonat-Kunststoff, Polystyrol-Kunststoff, Styrol-Acryl-Nitril-Kunststoff, Polyethylentherephthalat-Kunststoff, glykolmodifizierter Polyethylentherephthalat-Kunststoff, Polyvinylchlorid-Kunststoff, transparenter Polyolefin-Kunststoff, Acrylnitril-Butadien-Stryrol (ABS)-Kunststoff und/oder eine Mischung (Blend) der genannten Kunststoffe sein.

### Verwendungen

Die erfindungsgemäßen Formkörper können z. B. für Fahrzeugkarosserien, Designermöbel, Hinweisschilder oder Teilen davon oder für die Beleuchtungstechnik, z. B. für Lichtwerbeanlagen verwendet werden. Zur Anregung der Fluoreszenz reicht in der Regel bereits das normale Tageslicht aus. Ebenso kann eine aktive Beleuchtung z. B. mittels Leuchtstoffröhren oder gegebenenfalls mit LEDs erfolgen.

### BEISPIELE

### Lösung:

In 1000 Teilen präpolymeres Methylmethacrylat (Viskosität ca. 1000 cP) werden
- 1: Teil 2,2'-Azobis-(2,4-dimethylvaleronitril) und die Farbmittel nach Tab. 1 gelöst.

In diesen Ansatz gibt man eine Farbpaste bestehend aus
- 3: Gew.-Teilen eines löslichen Polymetylmethacrylatharzes,
- 10: Gew.-Teilen Bariumsulfat und je nach Versuch die in Tabelle 1 angegebenen Mengen (Gew.-%) Titandioxid bzw. Zinksulfid, die in
- 30: Gew.-Teilen Methylmethacrylat mit einem schnelllaufenden Dispergator (Rotor/Stator-Prinzip) dispergiert wird, hinzu

Der Ansatz wird intensiv gerührt, in eine mit 3mm dicken Schnur distanzierten Silikatglaskammer gefüllt und im Wasserbad bei 45°C polymerisiert. Die Endpolymerisation erfolgt im Temperschrank bei 115°C.

Die Messung des Farborts (L*, a*, B*) erfolgt mit einem Spektralphotometer nach DIN 5033.

**Tab. 1**

| **Vers. - Nr.** | **Titandioxid** | **Zinksulfid** | **Lumogen F Orange 240** | **Lumogen F Gelb 083** | **Lumogen F Rot 305** | **Hostasol Gelb 3G** |
|---|---|---|---|---|---|---|
| **113T** | ---- | ---- | 0,05 | ---- | ---- | ---- |
| **144M** | 0,0075 | ---- | 0,05 | ---- | ---- | ---- |
| **113Q** | ---- | ---- | ---- | 0,05 | ---- | ---- |
| **144K** | 0,0075 | ---- | ---- | 0,05 | ---- | ---- |
| **113S** | ---- | ---- | ---- | ---- | 0,05 | ---- |
| **144E** | | 0,0125 | ---- | ---- | 0,05 | ---- |
| **144G** | 0,0075 | ---- | ---- | ---- | 0,05 | ---- |
| **148A** | | ---- | ---- | ---- | ---- | 0,05 |
| **148F** | 0,0075 | ---- | ---- | ---- | ---- | 0,05 |

| | | | | | | |
|---|---|---|---|---|---|---|
| **Angaben:** in Gew.% | | | | | | |

Ergebnisse:

**Tab. 2 Farbwerte L, a, b nach CIELAB bei Lichtart D65/10° in Remission**

| **Vers.-Nr.** | **Farbton** | **L*** | **a*** | **b*** | **Remissionsgrad In%** | **visuelle Beurteilung bei Tageslicht D65** |
|---|---|---|---|---|---|---|
| **113T** | Orange | 56,29 | 23,66 | 94,86 | 24,2 | orangegelb fluoreszierend, etwas trübe |
| **144M** | Orange | 66,10 | 29,80 | 105,55 | 35,5 | orangegelb fluoreszierend, sehr brillant |
| **113Q** | Gelbgrün | 62,34 | -31,70 | 80,00 | 30,8 | gelb fluoreszierend, etwas trübe |
| **144K** | Gelbgrün | 70,53 | -31,21 | 90,56 | 41,5 | gelb fluoreszierend, sehr brillant |
| **113S** | Rot | 34,77 | 60,93 | 59,94 | 8,4 | rot fluoreszierend, etwas trübe |
| **144E** | Rot | 37,81 | 65,73 | 59,53 | 10,0 | rot fluoreszierend, sehr brillant |
| **144G** | Rot | 37,40 | 64,83 | 58,77 | 9,8 | rot fluoreszierend, sehr brillant |
| **148A** | Gelb | 64,40 | -30,14 | 90,36 | 33,3 | gelb fluoreszierend, etwas trübe |
| **148F** | Gelb | 72,31 | -28,77 | 99,64 | 44,1 | gelb fluoreszierend, sehr brillant |

Wie aus den Farbwerten und auch bei visueller Beurteilung ersichtlich, sind die mit der Kombination Bariumsulfat/Titandioxid (Zinksulfid) hergestellten Produkte deutlich brillanter im Farbton. Rot hat einen höheren Rotwert, Gelb hat einen höheren Gelbwert usw. Auch visuell ist die Verbesserung deutlich zu erkennen.

## Patentansprüche

1. Formkörper aus einer Kunststoff-Matrix aus einem transparenten Kunststoff, enthaltend einen löslichen Fluoreszenzfarbstoff und ein Streumittel mit einem Brechungsindexunterschied von +/- 0,003 bis 0,2 zur Kunststoff -Matrix,
**dadurch gekennzeichnet, daß**
zusätzlich ein Weißpigment, das einen Brechungsindexunterschied von + 0,4 bis 1,5 zur Kunststoff-Matrix aufweist, in einer Konzentration von 0,001 bis 0,1 Gew.-% enthalten ist.

2. Formkörper nach Anspruch 1, **dadurch gekennzeichnet, daß** als Weißpigment Titandioxid, Zinkoxid oder Zinksulfid eingesetzt wird.

3. Formkörper nach Anspruch 1 oder 2, **dadurch gekennzeichnet, daß** als Streumittel Aluminiumhydroxid, Aluminium-Kalium-Silikat (Glimmer), Aluminiumsilikat (Kaolin), Bariumsulfat, Calciumcarbonat, Magnesiumsilikat (Talkum), Polystryrol und/oder Lichtstreuperlen aus vernetztem Kunststoff enthalten sind.

4. Formkörper nach einem oder mehreren der Ansprüche 1 bis 3, **dadurch gekennzeichnet, daß** sein Remissionsgrad um mindestens 10 % höher liegt als bei einem entsprechenden Formkörper ohne Weißpigment.

5. Formkörper nach einem oder mehreren der Ansprüche 1 bis 4, **dadurch gekennzeichnet, daß** der transparente Kunststoff der Kunststoff-Matrix eine Transmission im sichtbaren Bereich von mindestens 40 % aufweist (Lichttransmissionsgrad für Tageslicht (Normlichtart D65) τ_{D65} s. z. B. DIN 67 507).

6. Formkörper nach einem oder mehreren der Ansprüche 1 bis 5, **dadurch gekennzeichnet, daß** der transparente Kunststoff der Kunststoff-Matrix extrudierter Polymethylmethacrylat-Kunststoff, gegossener Polymethylmethacrylat-Kunststoff, schlagzäh modifizierter Polymethylmethacrylat-Kunststoff, Polycarbonat-Kunststoff, Polystyrol-Kunststoff, Styrol-Acryl-Nitril-Kunststoff, Polyethylentherephthalat-Kunststoff, glykolmodifizierter Polyethylentherephthalat-Kunststoff, Polyvinylchlorid-Kunststoff, transparenter Polyolefin-Kunststoff, Acrylnitril-Butadien-Stryrol (ABS)-Kunststoff und/oder eine Mischung (Blend) der genannten Kunststoffe ist.

7. Formkörper nach einem oder mehreren der Ansprüche 1 bis 6, **dadurch gekennzeichnet, daß** der Fluoreszenzfarbstoff in Kombination mit weiteren Farbmitteln vorliegt.

8. Verwendung von Formkörpern nach einem oder mehreren der Ansprüche 1 bis 7 für Fahrzeugkarosserien, Designermöbel, Hinweisschilder oder Teilen davon oder für die Beleuchtungstechnik, z. B. für Lichtwerbeanlagen.

## Claims

1. Moulding composed of a plastics matrix composed of a transparent plastic, comprising a soluble fluorescent dye and a scattering agent whose refractive-index difference from the plastics matrix is +/- from 0.003 to 0.2,
**characterized in that**
a white pigment whose refractive-index difference from the plastics matrix is from + 0.4 to 1.5 is also present, at a concentration of from 0.001 to 0.1% by weight.

2. Moulding according to Claim 1, **characterized in that** the white pigment used comprises titanium dioxide, zinc oxide or zinc sulphide.

3. Moulding according to Claim 1 or 2, **characterized in that** the scattering agents present comprise aluminium hydroxide, aluminium potassium silicate (mica), aluminium silicate (kaolin), barium sulphate, calcium carbonate, magnesium silicate (talc), polystyrene, and/or light-scattering beads composed of crosslinked plastic.

4. Moulding according to one or more of Claims 1 to 3, **characterized in that** its reflectance is higher by at least 10% than that of a corresponding moulding without white pigment.

5. Moulding according to one or more of Claims 1 to 4, **characterized in that** the transparent plastic of the plastics matrix has transmittance of at least 40% in the visible region (light transmittance for daylight (D65 standard illuminant) τ_{D65}, see, for example, DIN 67 507).

6. Moulding according to one or more of Claims 1 to 5, **characterized in that** the transparent plastic of the plastics matrix is extruded polymethyl methacrylate, cast polymethyl methacrylate, impact-modified polymethyl methacrylate, polycarbonate, polystyrene, styrene-acrylonitrile, polyethylene terephthalate, glycol-modified polyethylene terephthalate, polyvinyl chloride, transparent polyolefin, acrylonitrile-butadiene-styrene (ABS) and/or a mixture (blend) of the plastics mentioned.

7. Moulding according to one or more of Claims 1 to 6, **characterized in that** the fluorescent dye is present in combination with other colorants.

8. Use of mouldings according to one or more of Claims 1 to 7 for vehicle bodywork, designer furniture, signage, or parts thereof, or for lighting systems, e.g. for illuminated advertising installations.

## Revendications

1. Corps moulé à base d'une matrice plastique en plastique transparent, contenant un colorant fluorescent soluble et un agent de diffusion ayant une différence d'indice de réfraction de ± 0,003 à 0,2 par rapport à la matrice plastique,
**caractérisé en ce qu'**un pigment blanc, qui présente une différence d'indice de réfraction de + 0,4 à 1,5 par rapport à la matrice plastique, est également contenu en une concentration de 0,001 à 0,1 % en poids.

2. Corps moulé selon la revendication 1, **caractérisé en ce que** du dioxyde de titane, de l'oxyde de zinc ou du sulfure de zinc est utilisé en tant que pigment blanc.

3. Corps moulé selon la revendication 1 ou 2, **caractérisé en ce que** de l'hydroxyde d'aluminium, du silicate d'aluminium et de potassium (mica), du silicate d'aluminium (kaolin), du sulfate de baryum, du carbonate de calcium, du silicate de magnésium (talc), du polystyrène et/ou des perles diffusant la lumière à base de plastique réticulé sont contenus en tant qu'agent de diffusion.

4. Corps moulé selon une ou plusieurs des revendications 1 à 3, **caractérisé en ce que** son degré de réflectivité est au moins 10 % supérieur à celui d'un corps moulé correspondant sans pigment blanc.

5. Corps moulé selon une ou plusieurs des revendications 1 à 4, **caractérisé en ce que** le plastique transparent de la matrice plastique présente une transmission dans le domaine visible d'au moins 40 % (degré de transmission de la lumière du jour (illuminant normalisé D65) τ_{D65} selon p. ex. DIN 67 507).

6. Corps moulé selon une ou plusieurs des revendications 1 à 5, **caractérisé en ce que** le plastique transparent de la matrice plastique est un plastique de polyméthylméthacrylate extrudé, un plastique de polyméthylméthacrylate coulé, un plastique de polyméthylméthacrylate dont la résistance aux chocs a été modifiée, un plastique de polycarbonate, un plastique de polystyrène, un plastique de styrène-acrylonitrile, un plastique de polyéthylène téréphtalate, un plastique de polyéthylène téréphtalate modifié par du glycol, un plastique de chlorure de polyvinyle, un plastique de polyoléfine transparent, un plastique d'acrylonitrile-butadiène-styrène (ABS) et/ou un mélange des plastiques cités.

7. Corps moulé selon une ou plusieurs des revendications 1 à 6, **caractérisé en ce que** le colorant fluorescent est présent en combinaison avec d'autres colorants.

8. Utilisation de corps moulés selon une ou plusieurs des revendications 1 à 7 pour des carrosseries automobiles, des meubles de designer, des panneaux indicateurs ou leurs parties, ou pour le domaine de l'éclairage, p. ex. pour des structures publicitaires éclairées.
